# EUROPEAN PATENT APPLICATION

(11) **EP 4 650 188 A1**
(43) Date of publication of application: **19.11.2025**
(21) Application number: 24175357.3
(22) Date of filing: 13.05.2024
(51) Int. Cl.: B60B 9/10, A45C 5/14, B60B 9/26, B60B 33/00, B65G 39/06

(54) **SUSPENSION WHEEL FOR LUGGAGE CASES**

(71) Applicant: Samsonite IP Holdings S.à r.l., 1931 Luxembourg (LU)
(72) Inventor: MEERSSCHAERT, Reinhard, 9820 Merelbeke (BE)
(74) Representative: Lloyd, Robin Jonathan

(57) **Abstract**

A wheel (200) for a luggage case (100), including an hub (210) rotatably coupled to the luggage case, an outer rim (218) radially spaced a distance from the hub by a plurality of spokes (230), and a tread portion (280) positioned around the outer rim for engaging a support surface. At least one of the spokes includes a suspension portion (236) having a C-shape that is curved around and concave to the axis of rotation (202) of the wheel. The suspension portion resiliently deflects to absorb impact loads to the wheel.

## Description

### FIELD

The described embodiments relate generally to wheels for luggage cases or articles.

### BACKGROUND

Luggage cases often include wheels to allow efficient transport by the user during travel. However, luggage wheels are often relatively small or compact to limit their impact on the overall size of the luggage case, and relatively light to prevent adding to the weight of the luggage. The smaller wheels may struggle to easily roll over obstacles, or may rigidly impart a jarring force to the luggage case when rolling over rough surfaces. The forces may be uncomfortable for the user, may be jarring to the items within the luggage case, and may damage the wheel, or a hub or axle to which the wheel is attached. The damage may reduce a usable life span of the luggage case.

Accordingly, there is a need for luggage wheels that may reduce or absorb forces caused by impacts as noted above, thereby reducing forces imparted to the luggage case, and in turn, the user. There is also a need for a wheel with a longer life span, or that improves the lifespan of the luggage case as a whole.

### SUMMARY

In one example of the present disclosure, a luggage case is disclosed. The luggage case includes a wheel rotatably coupled to a luggage case and having an axis of rotation defining an axial direction, the wheel includes a hub, an outer rim positioned radially from the hub, and a plurality of spokes each connected between the hub and the outer rim. At least one of the spokes includes a first stem, a suspension portion having a generally C-shape form that curves and is concave to or about the axis of rotation, and a second stem, and wherein the suspension portion at least partially resiliently deflects under an impact load to the wheel. The generally C-shape form may be elongate in form, such as for example a generally stretched C-shape. The C-shaped form may be positioned between and joined to the first stem and the second stem. Additionally or optionally the suspension portion includes a first part extending circumferentially, a second part extending from the first part, and a third part extending from the second part circumferentially in the opposite direction to the first part.

Additionally or optionally the second part and third part define a rectilinear shape.

Additionally or optionally, the first stem and the second stem are aligned with one another, or are mis-aligned with one another.

Additionally or optionally, a tread portion is positioned on the outer rim for engaging a support surface. Additionally or optionally, the tread portion has an angled profile wherein an inner edge of the tread defines a greater radial distance from the axis of rotation than the outer edge of the tread, wherein the inner edge of the tread engages the support surface. Additionally or optionally, the wheel is positioned on the luggage case so that the inner edge of the tread is closer to the luggage case than the outer edge of the tread. Additionally or optionally, the inner edge of the tread is positioned closer to the luggage case than the mounting location of the wheel to an axle extending from the luggage case.

Additionally or optionally, the suspension portion is resiliently deflectable both radially and axially in response to the impact load.

Additionally or optionally, the suspension portion is curved around the hub or is concentric to the hub and/or the outer rim.

Additionally or optionally, the suspension portion extends circumferentially in a single direction relative to the first stem and the second stem.

Additionally or optionally, the plurality of spokes includes at least two spokes, each having a suspension portion, and wherein the at least two suspension portions both extend in the same direction relative to the hub, or wherein the at least two suspension portions extend in opposite directions relative to the hub.

Additionally or optionally, the first part is adjacent the hub and the third part is adjacent the outer rim and are connected together and defining an interior gap therebetween, wherein the first part and the third part move relative to one another and change the dimension of the interior gap when the suspension portion at least partially resiliently deflects responsive to an impact load.

Additionally or optionally, the interior gap defines a width defined in the radial direction.

Additionally or optionally, the first part and third part are connected by a second part that defines a dimension of the interior gap.

Additionally or optionally, the first part and the third part have the same curvature.

Additionally or optionally, the second part extends radially and defines a curved surface extending between the first part and third part facing the interior gap.

Additionally or optionally, the first part is shorter than the third part.

Additionally or optionally, the first part is spaced away from the hub defining an inner gap, and the third part is spaced away from the outer rim defining an outer gap, and at least one or more of the inner gap, outer gap, and/or interior gap change size or shape when the suspension portion resiliently deflects due to the impact load.

Additionally or optionally, the first part is spaced away from the hub defining an inner gap, and the third part is spaced away from the outer rim defining an outer gap, and the first part and third part engage, or the first part and hub engage, and/or the third part and outer rim engage when the suspension portion resiliently deflects due to the impact load.

Additionally or optionally, a flange extending from one of the first part or third part toward the other of the first part or third part; and wherein responsive to an angled impact load, the other of the first part or third part deflects and engages the flange, which resists the axial movement of the deflecting part.

Additionally or optionally, the flange is positioned across the interior gap between the first part and third part and overlaps at least a portion of the other of the first part or the third part.

Additionally or optionally, the flange is positioned along at least a portion of a length of the interior gap and overlaps at least a portion of the other of the first part or the third part.

Additionally or optionally, the flange extends from an inner and/or outer side of the first part, or from an inner and/or outer side of the third part.

Additionally or optionally, the flange is positioned at approximately 25%-75% of the distance between the hub and the outer rim. This enhances the resilience of the suspension portion by moving it radially away from the hub to have a greater circumferential engagement.

Additionally or optionally, the at least one spoke includes three to seven spokes and preferably five spokes.

In another example, a luggage case may include at least one wheel, wherein the wheel includes an inner rim and an outer rim spaced from the inner rim. Two or more spokes may extend between the outer rim and the inner rim. The two or more spokes may each define a suspension portion that resiliently deflect in response to an impact load or force acting on the wheel. In some examples, the outer rim may include or couple with a tread portion. The two or more spokes extend between the inner rim and the outer rim. At least one of the spokes includes a suspension portion attached by an inner stem to the inner rim and by an outer stem to the outer rim. The suspension portion may be generally U-shaped and extend in one direction relative to the respective stems. The suspension portion may resiliently deflect upon an impact load engaging the wheel.

The suspension portion may include two arms, also referred to as spoke portions, each defining opposing ends, attached together by a bridge. In one example the bridge attaches adjacent ends of each of the two arms. The arms and bridge together form a suspension portion of the spoke, which acts to absorb, in part, an impact to the wheel. The length of the bridge defines an interior gap that spaces the two arms apart from one another. The other opposing end of each arm may be attached to the stems as noted above. For example, an inner arm (for example the arm closest to the inner rim) may be attached to the inner stem extending from the inner rim, and the outer arm (for example the arm closest to the outer rim) may be attached to the outer stem extending from the outer rim.

In some examples, the stems may be aligned along a radial line extending from the inner rim to the rim. In other examples, the stems may be radially offset or spaced relative to the radial line. The inner and outer arms of the suspension portion extend in one direction from their respective stems, with an outer gap formed between the outer arm and the rim, an inner gap formed between the inner arm and the inner rim, and an interior gap formed between the inner arm and the outer arm. A radial gap may be formed between adjacent spokes, between the inner and outer stems of one spoke and the bridge of an adjacent spoke. The spokes may be rectilinearly formed between the inner rim and the outer rim. The spokes may in part define an arcuate shape. In one example the suspension portion of a spoke may have a curved shape, and in one example may be curved around the inner rim, or may be curved around an axis of rotation of the wheel. For example, the arms may extend concentrically to the axis of rotation, to the inner rim or outer rim. The bridge or the stems may extend linearly or in some examples radially between or from the arms, the inner rim or outer rim.

The wheel spokes forming the resilient portion may resiliently deflect to absorb an impact load on the wheel. The impact load may be primarily radially-directed or may be primarily diagonally-directed. In many cases the impact load will include a radial load component, and a lateral load component. In a radially-directed impact, the force is at a normal or right angle to the rotation axis of the wheel. In this case the impact load is applied in a line between the outer rim and the inner rim. In a lateral or axial load, the force is at parallel to the rotation axis of the wheel. In a diagonally-directed impact, the load is made at a non-right angle with the rotation axis of the wheel, which in one example may include both a radial and lateral load component. In either case, the impact may result in the deflection of one, two, or more spokes.

Under a radially-directed impact load component, the spokes in the area between the contact region of the outer rim and the inner rim may be placed in compression and deflect. In some examples, the impact load may impact primarily a single spoke, or may impact two or more spokes. Taking the example of a single spoke deflecting in compression due to radial impact, the hub of the wheel may relatively move towards the outer rim, causing the resilient deformation of the suspension portion of the spoke. The arms of the suspension portion may deflect and change shape to absorb all or part of the impact force. In some examples, the inner and outer arms may flex towards each other and change the width of the interior gap. In some examples, the impact load causes flexing or deflection of the spokes, but the inner and outer arms of the spokes do not contact or engage each other or the outer rim or the inner rim. In other examples, such as where the impact force is sufficiently great, the inner and outer arms may deflect sufficiently to allow the respective stems, the inner and outer arms, and/or both to contact or engage each other when absorbing the impact. This is referred to as "bottoming out". The continuous outer rim may assist in dispersing the impact forces between adjacent spokes and in that way assist in effectively absorbing the impact force.

In some examples, spokes located generally opposite of spoke nearest the contact region may be placed in tension in response to the impact load. For example, a suspension portion of a second spoke positioned opposite a first spoke nearest the impact load may stretch in tension in response to a compression of a first spoke. This may occur in some examples, such as when the inner rim moves away from the outer rim to which the second spoke is connected.

Where the impact force is diagonally directed, the suspension portion may deflected radially as well as in an axial (e.g. lateral) direction. This is because a diagonally-directed impact has both radial component forces and axially-directed component forces. The axial deflection of the suspension portion results from the inner arm and outer arm of the suspension portion moving out of plane with one another. Typically the outer arm, being closer to the location of the impact, will deflect more relative to the inner arm.

A limiting feature, also referred to as a collar, attached to the inner arm and extending to the outer arm may interfere with and limit the deflection of the outer arm. The collar assists in limiting axial deflection or deflection transverse to the direction of rotation. For example, the outer arm that is deflecting axially will contact the collar, which will reduce or impede any further deflection in the axial direction. In this manner the outer rim, and in turn the tread may stay more in line with the inner rim during rotation of the wheel. By limiting axial deflection the wheel may experience reduced torsional forces or bending, preventing damage to the wheel and increasing the lifespan of the wheel. Limiting axial deflection may also assist in maintaining a consistent direction of travel of the wheels on a support surface such as a floor. By positioning the collar to one side, the collar may not inhibit radial deflection and allow the spoke to absorb or deflect under radial loads.

The wheel may include a plurality of spokes. For example, the wheel may include two spokes or more, three spokes or more, four spokes or more, five spokes or more, six spokes or more, seven spokes or more, and so on. The spokes may be evenly spaced about the inner rim.

Additional embodiments and/or features are set forth in part in the description that follows, and will become apparent to those skilled in the art upon examination of the specification or may be learned by the practice of the disclosed subject matter. A further understanding of the nature and advantages of the present disclosure may be realized by reference to the remaining portions of the specification and the drawings, which forms a part of this disclosure. One of skill in the art will understand that each of the various aspects and features of the disclosure may advantageously be used separately in some instances, or in combination with other aspects and features of the disclosure in other instances. A number of feature refinements and additional features are applicable and contemplated in light of the present disclosure. These feature refinements and additional features may be used individually or in any combination. As such, each of the following features that will be discussed may be, but are not required to be, used with any other feature combination of the first aspect. In addition to the exemplary aspects and embodiments described above, further aspects and embodiments will become apparent by reference to the drawings and by study of the following description.

### BRIEF DESCRIPTION OF THE DRAWINGS

The disclosure will be readily understood by the following detailed description in conjunction with the accompanying drawings, wherein like reference numerals designate like structural elements, and in which:
FIG. 1 depicts a rear right perspective view of an example luggage case with wheels embodying the invention(s) described herein;
FIG. 2 depicts a side elevation view of the luggage case of FIG. 1;
FIG. 3 is a perspective view of a wheel in schematic form for representing the forces imparted on a wheel during use;
FIG. 4 is a perspective view of the outer side of a wheel as shown in FIGS. 1 or 2, including the flange structure;
FIG. 5 is a perspective view of an inner side of a wheel as shown in Figs. 1 or 2, including the flange structure;
FIG. 6A is an elevation view of the wheel of Figs. 3 and 4 in an un-compressed configuration;
FIG. 6B is an elevation view of the wheel of FIG. 6A in a compressed configuration;
FIG. 7A is a cross section taken along line 7A-7A of FIG. 6A; and
FIG. 7B is a cross section taken along line 7B-7B of FIG. 6B.

### DETAILED DESCRIPTION

The invention describe herein relates generally to a wheel for a luggage case that resiliently deflects upon being impacted by an object, such as rolling over a curb, surface feature, or being dropped onto a support surface.

Reference will now be made to the accompanying drawings, which assist in illustrating various features of the present disclosure. The following description is presented for purposes of illustration and description. Furthermore, the description is not intended to limit the inventive aspects to the forms disclosed herein. Consequently, variations and modifications commensurate with the following teachings, and skill and knowledge of the relevant art, are within the scope of the present inventive aspects.

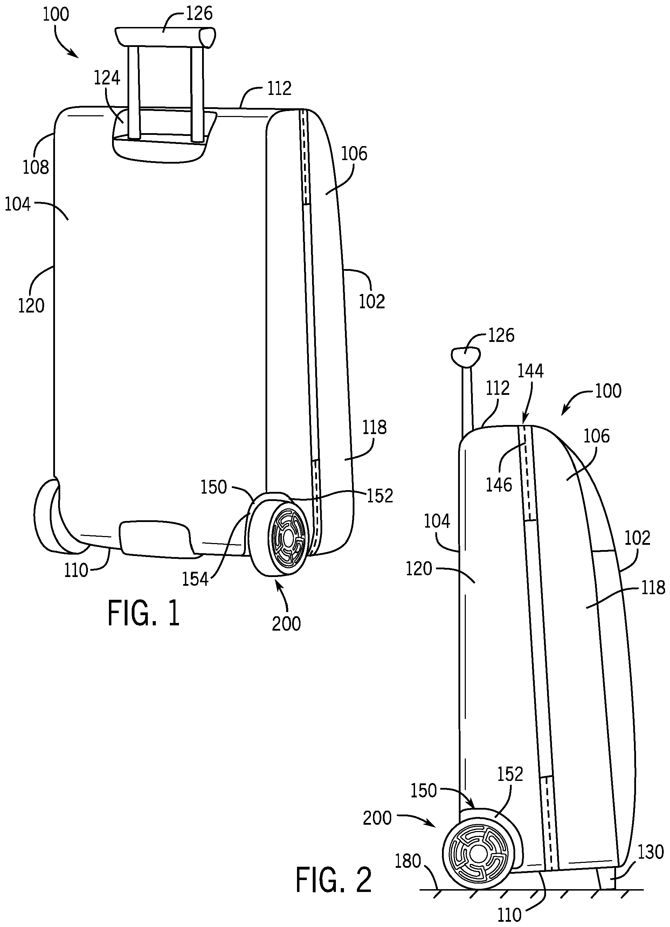

FIG. 1 shows a rear-left view of an example luggage case 100 in a closed configuration and including wheels 200. The luggage case 100 may be alternatively referred to as a luggage article, bag, trolley, etc. In one example, the luggage case 100 may be an upright hard-sided case, such as a spinner luggage case. In other examples, the luggage article 100 may be many types of luggage, including a soft side spinner case with a moulded internal shell or panels, a hybrid spinner case, a container, or the like. The luggage case 100 may include at least two shells, such as a first or front shell 118 and a second or rear shell 120. The shells 118, 120 may define an internal storage volume to carry or store a traveler's belongings.

The luggage case 100 may include a plurality of panels or sides. For example, the luggage case may include a front panel 102 and an opposing rear panel 104, opposing left panels 106 and right panels 108, and a bottom side or panel 110 and an opposing top side or panel 112.

The luggage case 100 may be selectively opened or closed by a closure assembly 144 to provide access to the internal storage volume. The closure assembly 144 may be a zipper assembly, latches, buckles, or other assemblies configured to mate the two or more shells 118, 120. The closure assembly 144 may define a line of connection 146 between the two or more shells 118, 120.

The luggage case 100 may include a retractable tow handle 126 extendable from a bezel or recess 124 of the rear panel 104 of the luggage article 100. The retractable tow handle 126 may extend outwardly from and retract into the bezel 124 and for a user to pull or tow the luggage article 100. In some examples, the luggage case 100 may include one or more carry handles for lifting or holding the luggage case 100.

The luggage case 100 includes two or more wheels 200. The wheel 200 may be coupled at or adjacent the bottom 110 of the luggage case 100. The wheel 200 may, in one example, be positioned near the rear side 104. The luggage case 100 may define a wheel housing 150 including a recess 152 in which the wheel 200 may be positioned. Each wheel housing 150 may define a coupling rod or axle 156 extending from an inner wall 154 for rotational coupling with the wheel assembly 170. In some examples two wheels may be attached to opposing lower corners on the same side of a luggage case. In these examples, each wheel may include a hub 210, defining an inner rim, mounted on an axle extending from the luggage case. In some examples, the hub 210 may include a bearing to allow for rotation of the wheel relative to the luggage case. In other examples, four wheels may be attached, one at each corner of the luggage case.

The wheels 200 may be spinner wheels, roller wheels, or the like. In one example, the wheels 200 are roller wheels. The luggage case 100 may tilt about the roller wheels and roll along a support surface 180. The luggage case 100 may include a foot or support element 130 upon which it may rest, along with the wheels 200, when stationary.

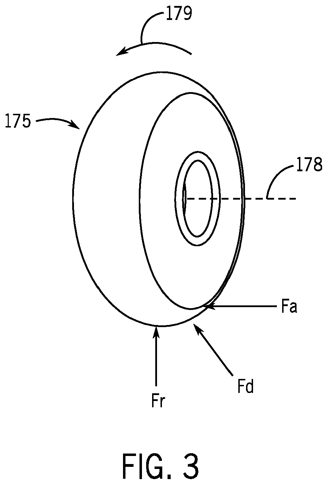

Referring to FIG. 3, during use, the wheel 200 may experience one or more impact loads or forces, as may be illustrated by a generic wheel 175 in FIG. 3. The generic wheel 175 may rotate about an axis of rotation 178, such as in a rotational direction 179. The impact load may include a radial component or radial forces Fr. The radial force Fr are aligned generally transverse or orthogonal to the axis of rotation 178. Example radial forces Fr may be caused by the weight of a luggage case 100, dropping of the luggage case 100 in an upright orientation vertically onto a support surface, forces from rolling directly over obstacles, or the like. The impact load may also include lateral components or axial forces Fa. Axial forces Fa are oriented parallel to the axis of rotation 178. Axial forces Fa may be caused by impacting the outside or inside of the wheel 175 against an object, such as a curb, or dropping a luggage case 100 in a sideways or angled orientation onto a support surface. During use, diagonal impact loads may often impact a wheel 175. Diagonal impact forces, Fd, include both radial force components and axial force components, resulting in a combined or diagonal load or force Fd. While diagonal impact forces may contact the wheel on either its inner side or outer side, FIG. 3 shows Fd impacting the outer side of the wheel 175, directed towards the inner side, which orientation is used for the examples herein.

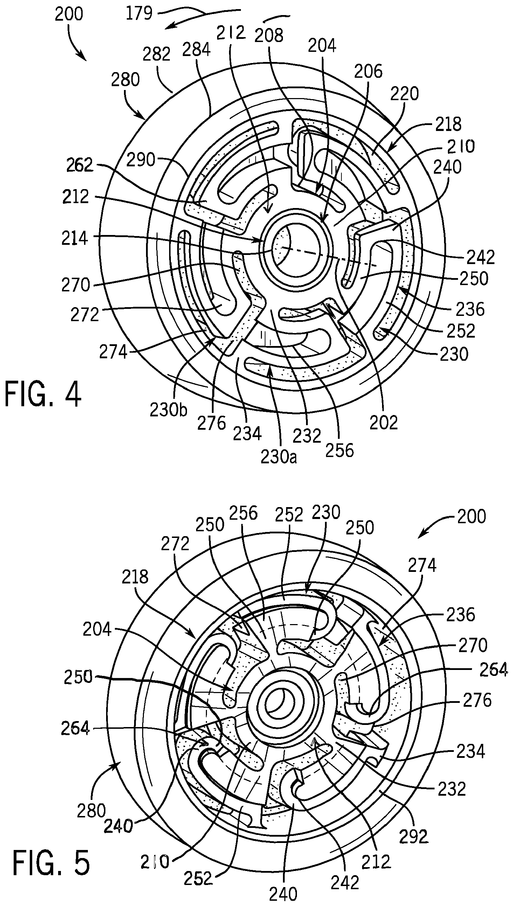

FIG. 4 and FIG. 5 illustrate views of an example wheel 200. FIG. 4 shows an exterior or outer side 290 of the wheel, while FIG. 5 shows an interior or inner side 292 of the wheel 200. The wheel 200 may, in one example, be made of a polymer or combination of polymers. The wheel may include a core 212 and a tire or tread 280 for engaging the ground. The wheel 200 may be formed by injection moulding as one piece, or maybe formed by two or more components assembled together into an integrated unit.

The core 212 of the wheel 200 may include a hub 210 defining an inner rim 204, an outer rim 218, and at least a plurality (at least two) of spokes 230 extending between the hub 210 and the outer rim 218. In some examples the spokes 230 may extend between the inner rim 204 and the outer rim 218. In one example, the core 212 may be integrally formed as a single component. Alternatively, the hub, spokes and outer rim that make up the core 212 may be formed separately and assembled together to form a single integrated unit. The outer rim 218 is radially spaced from the hub 210 by the at least two spokes 230. The inner rim, outer rim and the spokes may be formed of a material that is elastic or that resiliently deforms. For example, such a material returns to or about to its original shape after experiencing a deflecting force. In one example, the core 212 may, in one example, be made of polymer that has low creep characteristics and high toughness (a combination of high impact resistance at low temperatures). For example, suitable material may be Delrin^{®}, or Poketone^{™} (developed by Hyosung). The hub 210, outer rim 218 and spokes 230 may be made of the same material, or may be made of different polymers and joined together into one integrated unit (such as by co-moulding). The hub 210 may define an inner aperture 206 positioned at a central location of the wheel 200. A bushing or bearing 211 may be positioned in the aperture 206 to receive the axle 156 and allow the wheel 200 to rotate about the axis of rotation 202 relative to the luggage case 100. The hub 210 may also define an exterior surface 208 from which the spokes 230 extend towards the outer rim 218. In some examples the exterior surface may be defined by the inner rim 204, which may be circular in cross-sectional shape and be centered on or concentric to the aperture 206. The outer rim 218 may extends around the axis of rotation 202, such as in a circular form. The outer rim 218 may have a diameter between 4 and 10 cm. The outer rim 218 may include an interior surface 220.

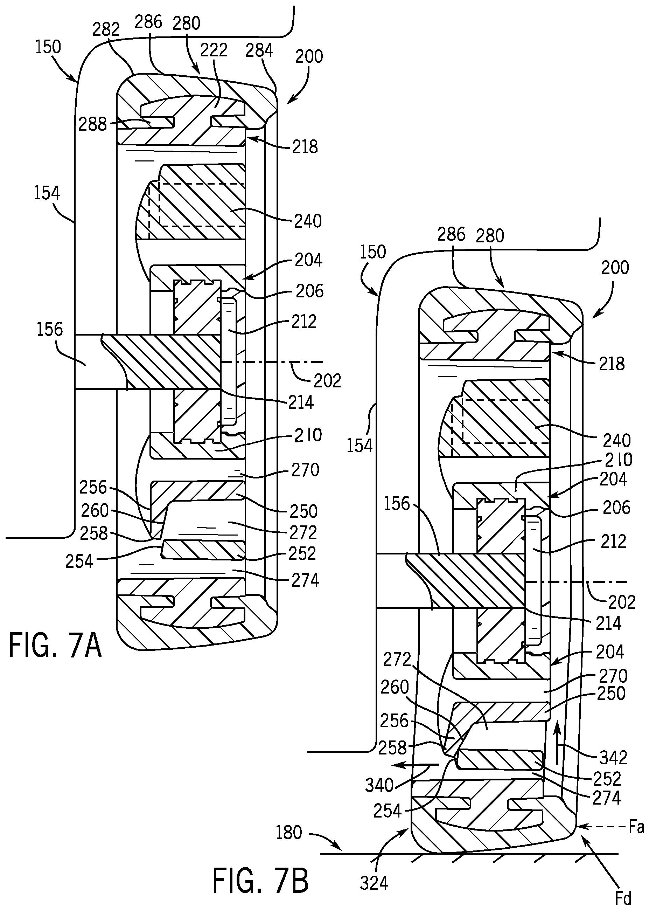

Referring still to FIGS. 4 and 5, the tire or tread 280 may be positioned or formed around an outer periphery of the core 212. In one example, the tire or tread 280 is positioned around the outer rim 218. In some examples the tread 280may be integrally formed by an outer surface of the outer rim 218. In the example with a tire 280 a circumferential recess may be formed on an inner radius of the tire 280 by attachment features 288 for coupling to the wheel 200. For example, the attachment features 288 may be a flange or flanges forming a recess having a corresponding shape or fit to the connecting feature 222 of the outer rim 218, as may be shown in FIG. 7A, to connect the tire to the outer rim. The tire or tread 280 may be made of, for example, TPE, TPU, casted PU or PVC. In one example, the hardness of the tread 280 may be in the range of 50-85 Shore A. As shown in FIGS. 7A and 7B, the profile of the tire 200, and in one example the tread 280, may be angled from an inside edge nearest the luggage case to an outside edge furthest from the luggage case. The inside edge may define the radially outermost part of the tread 280 and form the primary contact with the ground or support surface 180. This contact point with the support surface is axially inboard (See Figs. 7A, 7B) of the mounting of the hub 210 on the axle 156. This preferably loads the wheel 200 close to the body of the luggage case and reduces the moment arm acting on the axle which may aid in reducing the change of the axle flexing or permanently bending under load, and may also help with directional tracking of the wheel.

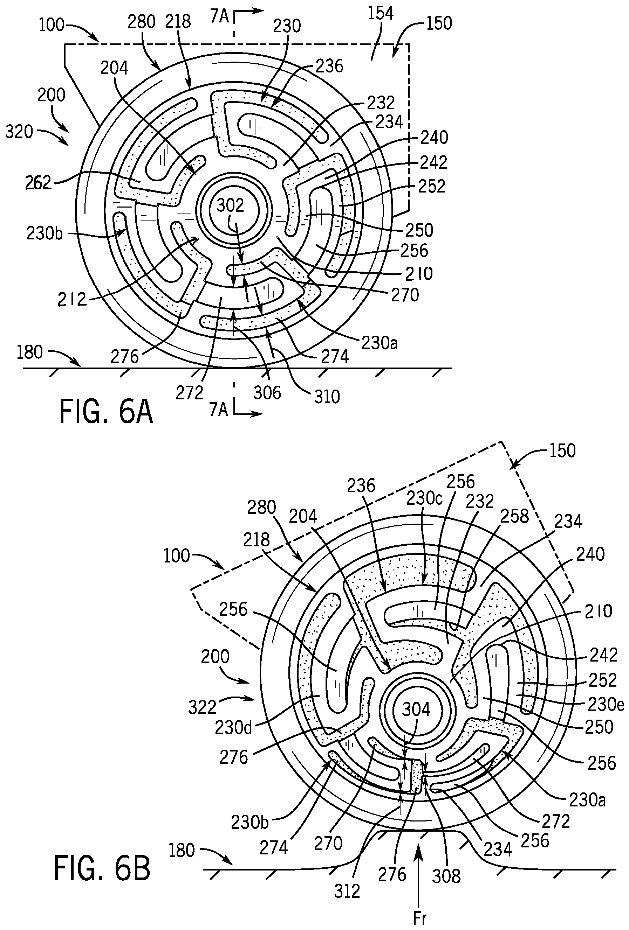

Still referring to Figs. 4 and 5, in one example, the wheel 200 includes two or more spokes 230 extending from the hub 210 to the outer rim 218. For example, the wheel 200 may include a first spoke 230a and a second spoke 230b, where each of the spokes include a first stem 232 (in one example an inner stem), a second stem 234 (in one example an outer stem), and a suspension portion 236. The stems 232, 234 may be integrally formed with the hub 210 and the outer rim 218. The inner stem 232 may extend from the outer surface or exterior 208 of the hub 210. In some examples the outer surface 208 may be defined by the inner rim 204. The outer stem 234 may extend from the inner surface 220 of the outer rim 218. In some examples, the stems 232, 234 may be separate elements that are attached to the hub 210 and/or the outer rim 218. The inner stem 232 and the outer stem 234 may be generally radially aligned, such as is shown in FIG. 6A, and in other examples may be mis-aligned, such as being radially offset from one another. Being generally radially aligned may benefit the resilient deformation of the suspension portion 236 between the two respective stems. In other examples, the inner and outer stems are positioned out of radial alignment to each other.

Referring still to FIGS. 4, 5, 6A, and 6B, the suspension portion 236 of the wheel 200 may resiliently deflect under an impact load imparted on the wheel 200. In one example, the suspension portion 236 may define a C-shape form. In one example, the suspension portion 236 may curve around the axis of rotation formed by the axle. In one example the suspension portion 236 may define a curve that is concave to the axis of rotation 202. In another example, the suspension portion 236 may be curved around the hub 210. In one example, the curvature of the suspension portion 236 is concentric to the hub 210. The curvature of the suspension portion 236 may also be separately or in addition to concentric with the outer rim 218. In one example, where the suspension portion 236 is in a C-shape form, it may curve and be concave to or about the axis of rotation. The C-shape form may be coupled with a first stem 232, and the second stem 234. The generally C-shape form may be elongate in form, e.g. a generally stretched C-shape. The C-shape form may be positioned between and joined to the first stem and the second stem.

In the example shown, the suspension portion 236 may extend circumferentially in a single direction relative to the first 232 and second 234 stems. As used herein, the term "circumferentially" includes extending only partially around an object, such as the axis of rotation 202 or the hub 210, such as is shown in FIG. 6A. The term "partially circumferentially" and the term "circumferentially" may have the same meaning based on the context, drawings, and description herein. In one example, the suspension portion 236 may include a first part 250 extending at least partially circumferentially in a first direction, a second part 240 extending from the first part 250, and a third part 252 extending from the second part 240 at least partially circumferentially in the opposite direction to the first part 250. The first part 250 and the third part 252 may each be elongated members or arms. In the example as shown, the first part 250 may be shorter than the third part 252, which may maintain benefit the resiliency of the suspension portion 236 since the longer third part 252 may then form a longer spring element than the shorter part 250. In one example, such as shown in FIGS. 4, 6A and 6B, the first part 250, second part 240, and third part 252 may define a rectilinear shape 262, which may assist in beneficially concentrating some of the deflection between the first and third parts at the corners formed at the intersection with the second part 240. In this example the rectilinear shape 262 is formed on an exterior facing surface of the wheel 200 (e.g. facing away from the luggage case). An interior facing surface of the wheel 200 (e.g. facing toward the luggage case) may also be rectilinear in shape. Alternatively, for example shown in FIG. 5, the first part 250, second part 240, and third part 252 may define a curvilinear shape 264, here shown as an interior facing surface (e.g. facing toward the luggage case), and may also form a curvilinear shape 264 on an exterior facing surface (e.g. facing away from the luggage case). In one example, the first 250 and third 252 parts may extend circumferentially about the hub 210. In one example, the first part 250 may connect with the first stem 232, and the third part 252 may connect with the second stem 234. In one example, the first part 250 is adjacent the hub 210, and the third part 252 is adjacent the outer rim 218, and are connected together to define an interior gap 272 therebetween. In one example, the first 250 and third 252 parts are connected together by the second part 240. The size of the second part 240 may define a size or dimension of the interior gap 272 in the radial direction. In one example, the first part 250 and the third part 252 have the same curvature, which creates an interior gap with substantially the same size along the length of the first and third parts. In another example the first part 250 and the third part 252 have different curvatures, which results in the interior gap having a size that changes along the length of the first and third parts. In this example, the first 250 and third 252 parts move relative to one another and change the dimension of the interior gap 272 when the suspension portion 236 at least partially resiliently deflects responsive to an impact load.

Referring to FIGS. 6A and 6B, in response to an impact load, the suspension portion may resiliently deflect and change shape. In one example, the first part 250 is spaced away from the hub 210 defining an inner gap, and the third part 252 is spaced away from the outer rim defining an outer gap, and the at least one or more of the inner gap, outer gap, and/or the interior gap change size or shape when the suspension portion resiliently deflects due to the impact load. In another example, the first part 250 is spaced away from the hub 210 defining an inner gap, and the third part 252 is spaced away from the outer rim defining an outer gap, and the first part 250 and third part 252 engage, or the first part 250 and the hub 210 engage, and/or the third part 252 and the outer rim engage when the suspension portion resiliently deflects due to the impact load.

Still referring to FIGS. 4-6B, in another example of describing the inventions disclosed herein, the first part 250 may be defined by an inner arm 250, the second part 240 may be defined by a bridge 240, and the third part 252 may be defined by an outer arm 252. Much or all of the structure described above may be the same or substantially similar to that described below, and for clarity purposes similar or the same reference number and structural features may be utilized. The spokes 230 may define one or more gaps to allow flexing or deflection in response to an impact load. A first or inner gap 270 may be defined between the inner arm 250 and the hub 210. The inner stem 232 may define the size of the first gap 270. The interior or second gap 272 may be defined between the inner arm 250 and the outer arm 252. The bridge 240 may define the size of the gap 270. An outer or third gap 274 may be defined between the outer arm 252 and the outer rim 218. The size of the third gap 274 may be defined in part by the outer stem 234. Adjacent spokes 230 may be spaced about the axis of rotation 202 by a radial or fourth gap 276. For example, the inner 232 and outer stems 234 of a first spoke 230a may be spaced from a bridge 440 of second spoke 230b by the radial gap 276. In some examples, the gaps 270, 272, 274, 276 communicate and are open to each other, and thus may form portions of a single aperture.

Continuing in this example, an inner (or first) spoke arm 250 and an outer (or second) spoke arm 252 are spaced apart by the bridge 240. Adjacent ends of the inner and outer arms 250, 252 are connected by a bridge 240 to form a general U-shape. The opposite ends of the inner and outer arms are each attached to a stem as described below. The bridge 240 defines, at least in part, a size of the interior gap 272 (e.g. gap dimension) between the inner and outer arms at the location of the bridge. This interior gap dimension may be between approximately 1 and 10 mm, between approximately 3 and 7 mm, or between approximately 4 and 6 mm. In one example the gap dimension is preferably approximately 5mm.

With reference still to FIG. 6A, the end of the inner arm 250 opposite the bridge 240 is connected to an inner stem 232, and defines an inner gap 270 relative to the hub 210. The end of the outer arm 252 opposite the bridge 240 is connected to a corresponding outer stem 234 and defines an outer gap 274 relative to the outer rim 218. The size of the inner 270 and outer 274 gaps is defined by the radial dimension or height of each stem. The inner gap 270 and the outer gap 274 may each have a gap dimension between approximately 1 and 10 mm, between approximately 3 and 7 mm, or between approximately 4 and 6 mm. In one example the gap dimension is preferably approximately 5mm. In various examples, the stem (e.g. inner and outer) and bridge (e.g. interior) gap dimensions may be the same, so the overall gap dimension is consistent along the length of the inner and outer arms. In other examples, the stem and bridge gap dimensions may be different from one another, causing the overall gap dimension of the suspension portion 236 to decrease from one end to an opposing end of the inner and outer arms 250, 252. In some examples, a collar or limiting flange 256 may be attached to one of the inner or outer arms and extend radially from one arm to the other arm to overlap the other arm, as explained in more detail below.

The suspension portion 236 may extend laterally of a radial line formed between the stems 232, 234 of the spoke 230. Accordingly, the inner 250 and outer 252 arms may each extend laterally. In one example, the suspension portion 236 (and thus the inner 250 and outer 252 arms) may have a curved shape, and in some examples may curve around the axis of rotation. In some examples, the curve is concave to the axis of rotation. In some examples the curved shape may be concave toward the axis of rotation, or in other examples may be concave to the inner rim. In one example, the curved shape is concentric to the axis of rotation. In another example, the inner 250 and outer 252 arms of the suspension portion 236 may each define a length that is greater than the radial distance between the hub 210 and the outer rim 218. The arms 250, 252 may be the same or different lengths. In one example, the inner spoke arm 250 may be shorter than the outer spoke arm 252. The gap dimension may be consistent along the length of the spoke arms 250, 252 to cause the arms to contact near their free ends when they deflect towards one another to close the gap dimension, which may occur under a significant deflection caused by a significant impact load. Alternatively, the gap dimension may be varied so the gap dimension increases, or alternatively decreases, from the stem connection to the bridge connection, in order to allow for the arms to contact each other when under a different impact load that causes a greater or lesser deflection, respectively.

The inner arm 250 (also, the inner spoke portion) may extend from the inner stem 232 and be spaced away from the inner rim. The outer arm (also, the outer spoke portion) 252 may extend from the outer stem 234 and be spaced away from the inner rim. Accordingly, the inner arm 250 is positioned adjacent the hub 210 and the outer arm 252 is positioned adjacent the outer rim 218.

Continuing to refer to Figs. 4, 5, 6A, 6B, the suspension portion 236 of at least one spoke 230 extends a single direction away from the respective stems 232, 234. In one example, the suspension portion 236 extends circumferentially in a single direction. In another example, the suspension portion 236 of an individual spoke may extend circumferentially clockwise and counterclockwise or both. In some examples, such as where there are a plurality of spokes, each with a suspension portion, the suspension portion 236 of each of the spokes 230 in a wheel extend in the same direction. For example, suspension portion 236 extends counter-clockwise as shown in FIGS. 4 and 6A. Accordingly, the arms 250, 252 defining in part the suspension portion 236 also extend counter-clockwise. In another example, where there may be at least two spokes 230, each with a suspension portion 236, each suspension portion 236 extend in the same direction relative to the hub 210. In another example, where there may be at least two spokes 230, each with a suspension portion 236, each of the two suspension portions 236 may extend in opposite directions relative to the hub 210.

In some examples, the suspension portion 236 may be positioned about mid-way between the hub 210 and the outer rim 218. In one example, the suspension portion is positioned approximately 25-75% of the distance between the hub 210 and the outer rim 218. For example, either or both of the arms 250, 252 may be within or between 25-75% of the distance between the hub 210 and the outer rim 218. In one example, the suspension portion 236 is centered or positioned, at least in part, at 50% of the distance between the hub 210 and the outer rim 218.

FIG. 5 depicts the inner or back side of the wheel 200, opposite the front side that is shown in FIG. 4. The suspension portion 236 of at least one spoke 30 includes a collar or flange 256 that is attached to the first part 250 (e.g. the inner arm 250) and extends across the interior gap 272 to overlap at least a portion of the third part 252 (e.g. the outer arm 252). As shown, the collar or flange 256 may be positioned on the inner side of the wheel between the wheel 200 and the shell 120. The collar or flange 256 may extend from the interior side 292 of one of the inner or outer arms 250, 252, respectively. When the wheel is deflected under an impact load that causes the suspension portion 236 to deflect at least in part axially and/or radially, the collar or flange 256 limits the amount of deflection. As best shown in FIG. 7B and further described herein, as the outer arm 252 is deflected axially or laterally it engages the collar or flange 256. The collar or flange 256 may be deflected itself, and reduces or inhibits further axial or lateral motion of the outer arm 252. This helps absorb the impact load and maintain the orientation of the wheel while in use. The collar or flange 256 may be integrally formed with the arm 250, 252 to which it is attached, or may be a separate structure and connected to the arm to form an integrated component.

In some examples, the collar or flange 256 may extend along all of the length of the arms 250, 252, or may extend along only a portion of the length of the arms. In one example, the collar or flange 256 may extend from at or adjacent the bridge 240 to at or adjacent the respective stems 232, 234. In a further example, such as is shown in FIGS. 6A and 6B, the collar or flange 256 may be a single continuous flange that extends radially from one arm towards the other arm. In other examples, the collar or flange 256 may be one or more discrete flanges that extends across the interior gap 272, and may or may not be spaced apart from one another. Discrete flanges may allow adjustment of the resistance to the deflection of the spoke portion when subject to an impact load. In other examples, the collar or flange 256 may be attached to the first, or inner arm 250 and extend to the second arm 252, as described herein. Alternatively, the collar or flange 256 may be attached to the second, or outer arm 252 and extend to the inner arm 250. In the examples shown herein, the collar or flange 256 may be attached to the inner side of either of the arms 250 or 252 (e.g. the side toward the shell 120). In other examples, the collar or flange 256 may be attached to the opposite, outer side 290 of either one of the arms 250, 252. Being attached to the outer side 290 of either one of the arms 250, 252 would help reduce or mitigate the lateral deflection of the wheel 200 caused by a diagonal impact load directed from the inner side of the wheel to the outer side of the wheel 200. In other examples, the collar or flange 256 may be attached to the inner side and the opposite, outer side 290 of either one of the arms 250, 252. This configuration may aid in lessening or mitigating the effect of diagonal loads impacting the inner side or outer side of the wheel 200. In one example, the collar or flange 256 may be positioned on a spoke midway between the hub 210 and the outer rim 218. Since the arms 250, 252 deflect axially relatively less near the inner rim, and relatively more near the outer rim 218, this midway position of the collar or flange 256 allows the collar or flange 256 to impede or lessen the axial (e.g. lateral) deflection more effectively where the deflection is relatively greater. In another example, the collar or flange 256 is positioned between approximately 25%-75% of the distance between the hub 210 and outer rim 218, respectively. In another example, the collar may be positioned at approximately 50% of the distance between the hub 210 and outer rim 218.

With reference to FIG. 7A, the collar or flange 256 is a flange that is coupled to the inner arm 250 and extends across the interior gap 272, and terminates in a tip or edge 258. The tip 258 is positioned adjacent an inner edge 254 of outer arm 252. In one example the tip 258 of the collar or flange 256 overlaps the inner edge 254. The tip 258 may engage the inner edge 254, or may be spaced away from the inner edge 254. If the tip engages inner edge 254, it will reduce or inhibit any lateral deflection of the outer arm 252. If the tip is spaced away from the inner edge, it will allow the outer arm 252 to deflect laterally a slight amount before it engages to reduce or inhibit further lateral motion. The collar or flange 256 may include an inner side or surface 260 that faces the interior gap 272.

Turning to FIGS. 6A-7B, examples of the wheel 200 before and after experiencing example impact loads are depicted. When an impact load is imparted on the wheel 200, the wheel 200 may absorb or reduce a portion of the impact load, which in turn reduces or disperses forces imparted on the luggage case 100. Impact loads may occur while the wheel 200 is rolling, or otherwise in motion, or when the wheel 200 is stationary relative to the luggage case 100 or a surface 180. FIGS. 6A and 6B are generally directed to the effect when the wheel 200 is under an impact load created by a radial force Fr. FIGS. 7A and 7B are generally directed to the effect when the wheel 200 is under an impact load created by a force applied diagonally at an angle directed from the outside of the wheel 200 towards the luggage case 100, and includes a component force in the axial or lateral direction.

The suspension portion 236 of at least one spoke 230 may flex or deflect to absorb the forces created by an impact load. The suspension portion 236 deflects by the flexing or deflecting movement of some or all of the inner and outer arms 250, 252, the bridge 240, the stems 232, 234, the hub 210, and/or the outer rim 218 relative to each other, depending on the magnitude of the impact load. In some examples, one or more spokes or portions of the spokes may compress in response to an impact load and another portion or portions of other spokes may stretch or lengthen under a localized tension.

In the undeflected configuration 320 as shown in FIG. 6A, spoke 230a first, or inner gap 270 may have a first gap dimension 302. The second, or interior gap 272 may have a first gap dimension 306. The third, or outer gap 274 may have a first gap dimension 310. The wheel 200 in FIG. 6B is shown under an impact load defined by radial force Fr, and in a compressed or deflected configuration 322.

The deflected configuration of wheel 200 under a radial impact load is shown in FIG. 6B. In response to the radial load Fr, the suspension portion 236 of spoke 230a deflects to absorb the load. In one example, the hub 210 is displaced downwardly relative to the outer rim 218, causing the spoke 230a of wheel 200 to deflect in compression between the hub 210 and the outer rim 218. In this configuration, for example, because the impact load is generally aligned with the stems 232, 234 of spoke 230a, the dimension of the second gap 272 may decrease in size (see dimension 308) near the inner and outer stems 232, 234 because the outer arm 252 deflects towards the inner arm 250. The outer arm 252 deflects inwardly position of the hub 210 shifts from its centered position in the wheel 200 to a lower position out of center in the wheel, and toward the outer rim 218. This puts the spoke 230a in compression and biases the hub 210 towards the outer stem 234, which in turn moves the end of the outside arm 252 toward the end of the inside arm 250.

Continuing with reference to FIG. 6B, in one example, the end of the outside arm 252 and the end of the inside arm 250 engage (e.g. dimension 308 is zero mm). In this engaged, or bottomed-out configuration, the inner 232 and outer 234 stems are also effectively in contact since the respective arms may be formed integrally with the stems. The outside arm 252 deflects less at the end attached to the bridge 240, where the dimension of the intermediate gap 272 is less impacted in this example. For example, the inner arm 250 may also resiliently flex or deform about or relative to the bridge 240 toward the inner rim, depending on the magnitude of the impact load. In one example, at least one or more of the inner gap 270, outer gap 274, and/or interior gap 272 change size or shape when the suspension portion 236 (for example, including the inner arm, outer arm and bridge) resiliently deflects due to the impact load. The inner curved surface 242 of the bridge 240 may assist in reducing or preventing stress concentrations on the bridge 240. In some examples, the stems 232, and/or 234 may similarly have an inner curved surface formed between the respective inner or outer arm and respective inner or outer rim for stress concentration relief. In one example, the bridge 240 may define curved surface 242 extending between the inner arm and outer arm facing the interior gap. The bridge 240 may defines a linear surface between the inner arm and outer arm opposite the interior gap.

During deflection under a primarily radial load Fr, the collar or flange 256 may not contact, or may have limited contact with the opposing arm 252. Accordingly, the collar or flange 256 may not impede or limit resilient deflection of the suspension portion 236. As shown in FIG. 6B, the outer arm 252 deflects toward the inner arm 250, and passes along the surface 260 of the collar. Since in this example the collar or flange 256 is attached to the inner arm 250, it only moves to the extent the inner arm 250 is deflected. The collar or flange 256 is an optional feature and may or may not be included in a wheel 200 as described herein. During deflection the size or width of the spoke gap 276 may remain unchanged or may experience little change. Accordingly, the spacing of the spokes 230 may be maintained under a load.

One or both of the spokes 230 positioned next to spoke 230a, such as 230b, may additionally deflect in compression to assist in absorbing the impact load. For example, as shown in FIG. 6B, in some instances, since the impact load is more directly aligned with the bridge 240 of spoke 230b, the outer rim 218 may be deflected sufficiently such that the inner 270 and outer 274 gap dimensions 304, 312, respectively, are partially or completely collapsed. They are shown completely collapsed in FIG. 6B. The interior gap 272 may or may not change in dimension in this condition. When completely collapsed, the bridge 240 engages the hub 210 at one end and engages the outer rim 218 on the other end, which limits any further absorption of the impact load. The spokes opposite the axis of rotation 202 from the spoke 230a, such as spoke 230c, may also absorb the radial force Fr by stretching under a tensile force caused by the inner rim moving relatively downwardly in this configuration. Other spokes, such as spokes 230d and 230e (see FIGS. 6a, 6b) may also be deflected resiliently to assist absorbing the impact load. The continuous outer rim 218 and/or the tread 280 may assist in distributing the impact load throughout the wheel 200.

In various examples the wheel 200 may include a variety of a number of spokes 230. For example, the wheel 200 may include two spokes 230, three spokes 230, four spokes 230, five spokes 230, six spokes 230, seven spokes 230, and so on. The number of spokes 230 may correspond to a size of the wheel 200 or a desired deflection of the spokes 230. For example, a greater number of spokes 230 may result in the inner 250 and outer 252 arms of the suspension portion 236 being relatively shorter than if fewer spokes are utilized (based on a similarly sized wheel). Where the inner 250 and outer 252 arms are shorter, then the suspension portion may be subject to a higher stress concentration in each arm 250, 252, as a change in gap width may result in a larger angle or radial deflection of the arms 250, 252 over the shorter length. A shorter suspension portion may provide a benefit as a stiffer wheel suspension 230 to maintain a circular rolling surface and reduce friction with a support surface 180 during impact loads, but may result in a degradation of the resiliency of the spoke more quickly than a longer suspension portion. A longer suspension portion may result in lower stress concentrations due to a lower angle of radial deflection of the arms 250, 252 over the longer length. The longer suspension portion may have a decreased resistance to deformation for a given load.

In some examples, to prevent overloading or over-deflection of the suspension portion 236, such as the arms 250, 252, the suspension portion 230 may be configured so that the ends of the arms 250, 252 attached to the stems 232, 234, which in some examples form part of the stems themselves, contact and "bottom out" before inelastic or permanent deformation occurs. For example, the dimensions of the inner 270, outer 274, and intermediate 272 gaps, stems 232, 234, and/or bridge 240, may be selected such that a bottoming out occurs prior to permanent deformation.

In some examples, the number of spokes 230 may be an odd number, such as including 3, 5 (as shown in example herein), or 7. By selecting an odd number of spokes 230, each of the spokes 230 may be non-orthogonally or non-coincidentally aligned with another spoke 230 opposite the axis of rotation 202. In such an example, loads experienced by any one spoke 230 may be distributed to at least two other opposing spokes 230, thereby limiting or preventing a spoke 230 from experiencing an entire load in compression or tension. In one example, five spokes 230 may provide sufficient resistance to resiliently deform and absorb loads without over-stressing the spokes and negatively impacting the lifespan of the material.

FIG. 7A is a cross section of an example wheel 200 as in FIG. 6A under no impact load. Accordingly, the wheel 200 in FIG. 7A may be in an uncompressed or undeflected configuration 320. The view of FIG. 7A illustrates the example spacing of the features of the wheel 200 including the radial spacing of the hub 210, spokes 230, outer rim 218, tread 280, and collar or flange 256.

FIG. 7B depicts the wheel 200 of FIG. 7A after an impact load caused by a diagonal force Fd having an axial component Fa, depicted as direction 340. This diagonal force Fd causes a deflected stated depicted in FIG. 7B, showing an axially or laterally compressed and axially or laterally deflected configuration 324. For example, the outer arm 252 may or the outermost components of the wheel 200 may deflect, such as inward 340 or in the direction of the axial component FA.

The lateral deflection of a spoke 230 or spokes may be limited in a direction, such as direction 340, towards the wheel housing 150 or luggage case 100 generally. Limiting deflection towards the wheel housing 150 or the luggage case 100 may prevent the wheels 200 from causing a distorted or interrupted track of travel, and/or contacting the luggage case 100 upon impact. In some examples, features of the luggage case 10, such as the opposite wheel, or features of the wheel 200 itself, such as the tread 280, outer rim 218, and/or collar or flange 256, may additionally, or alternatively, limit deflection away from the luggage case 100. In some examples, the tread 280, outer rim 218, and/or collar or flange 256 may prevent or limit over-deflection (e.g. inelastic deformation) of the wheel 200 under a diagonal load.

Under a diagonal impact load causing deflection, the outer arm 252 may be deflected inwardly toward the luggage case 100, in the direction 340. When deflected inwardly, the edge 254 of the arm 252 may contact the tip 258 or surface 260 of the collar or flange 256. The collar or flange 256 may resist, such as be reducing or inhibiting the further lateral deflection of the outer arm 252. When contacted, the collar or flange 256 may resiliently deflect inwardly to absorb the load applied from the arm 252. The inner arm 250 to which the collar or flange 256 is attached, may aid in resisting the axial deflection. In some examples, the collar or flange 256 may also extend to overlap a portion of outer stem 234 to which the arm 252 is attached, and further assist in resisting the axial deflection of the outer stem 234 (to the extent it deflects).

Other examples and implementations are within the scope and spirit of the disclosure and appended claims. For example, features implementing functions may also be physically located at various positions, including being distributed such that portions of functions are implemented at different physical locations. Also, as used herein, including in the claims, "or" as used in a list of items prefaced by "at least one of indicates a disjunctive list such that, for example, a list of "at least one of A, B, or C" means A or B or C or AB or AC or BC or ABC (i.e., A and B and C). Further, the term "exemplary" does not mean that the described example is preferred or better than other examples.

The foregoing description, for purposes of explanation, uses specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not targeted to be exhaustive or to limit the embodiments to the precise forms disclosed. It will be apparent to one of ordinary skill in the art that many modifications and variations are possible in view of the above teachings.

## Claims

1. A wheel (200) rotatably coupled to a luggage case (100) and having an axis of rotation (202) defining an axial direction, comprising:
a hub (210), an outer rim (218) positioned radially from the hub (210), and a plurality of spokes (230, 230a, 230b, 230c, 230d, 230e) each connected between the hub (210) and the outer rim (218);
at least one of the spokes (230, 230a, 230b, 230c, 230d, 230e) includes a first stem (232), a suspension portion (236) having a C-shape that curves and is concave to the axis of rotation (202), and a first stem (234); and
wherein the suspension portion (236) at least partially resiliently deflects under an impact load to the wheel (200).

2. A wheel (200) as recited in claim 1, wherein the suspension portion (236) includes a first part (250) extending circumferentially, a second part (240) extending from the first part (250), and a third part (252) extending from the second part (240) circumferentially in the opposite direction to the first part (250).

3. A wheel (200) as recited in claim 2, wherein the first part (250), second part (240) and third part (252) define a rectilinear shape (262).

4. A wheel (200) as recited in any of claims 1-3, wherein the suspension portion (236) is resiliently deflectable both radially and axially in response to the impact load.]]

5. A wheel (200) as recited in any of claims 1-4, wherein the suspension portion (236) extends circumferentially in a single direction relative to the first stem (232) and the first stem (234).

6. A wheel (200) as recited in any of claims 1-5, wherein:
the plurality of spokes (230, 230a, 230b, 230c, 230d, 230e) includes at least two spokes (230, 230a, 230b, 230c, 230d, 230e), each having a suspension portion (236), and
wherein the at least two suspension portions (236) both extend in the same direction relative to the hub (210), or wherein the at least two suspension portions (236) extend in opposite directions relative to the hub (210).

7. A wheel (200) as recited in any of claims 1-6, wherein:
the first part (250) is adjacent the hub (210) and the third part (252) is adjacent the outer rim (218) and are connected together and defining an interior gap (272) therebetween; and
the first part (250) and the third part (252) move relative to one another and change the dimension of the interior gap (272) when the suspension portion (236) at least partially resiliently deflects responsive to an impact load.

8. A wheel (200) as recited in claim 7, wherein the first part (250) and the third part (252) have the same curvature.

9. A wheel (200) as recited in claim 8, wherein the first part (250) is spaced away from the hub (210) defining an inner gap (270), and the third part (252) is spaced away from the outer rim (218) defining an outer gap (274), and at least one or more of the inner gap (270), outer gap (274), and/or interior gap (272) change size or shape when the suspension portion (236) resiliently deflects due to the impact load.

10. A wheel (200) as recited in claim 8, wherein the first part (250) is spaced away from the hub (210) defining an inner gap (270), and the third part (252) is spaced away from the outer rim (218) defining an outer gap (274), and the first part (250) and third part (252) engage, or the first part (250) and hub (210) engage, and/or the third part (252) and outer rim (218) engage when the suspension portion (236) resiliently deflects due to the impact load.

11. A wheel (200) as recited in any of claims 1-10, further comprising:
a flange (256) extending from one of the first part (250) or third part (252) toward the
other of the first part (250) or third part (252); and
wherein responsive to an angled impact load, the other of the first part (250) or third part (252) deflects and engages the flange (256), which resists the axial movement of the deflecting part.

12. A wheel (200) as recited in claim 11, wherein:
the flange (256) is positioned across the interior gap (272) between the first part (250) and third part (252) and overlaps at least a portion of the other of the first part (250) or the third part (252).

13. A wheel (200) as recited in claim 12, wherein:
the flange (256) is positioned along at least a portion of a length of the interior gap (272) and overlaps at least a portion of the other of the first part (250) or the third part (252).

14. A wheel (200) as recited in any of claims 11-13, wherein the flange (256) extends from an inner and/or outer side of the first part (250), or from an inner and/or outer side of the third part (252).

15. A wheel (200) as recited in any of claims 1-14, wherein the at least one spoke (230, 230a, 230b, 230c, 230d, 230e) includes three to seven spokes (230, 230a, 230b, 230c, 230d, 230e) and preferably five spokes (230, 230a, 230b, 230c, 230d, 230e).
